# EUROPEAN PATENT APPLICATION

(11) **EP 4 838 045 A1**
(43) Date of publication of application: **11.11.2026**
(21) Application number: 26163983.5
(22) Date of filing: 11.03.2026
(51) Int. Cl.: F01D 5/06, F01D 21/02, F01D 21/04, F02C 7/36

(54) **A GAS-TURBINE ROTOR ARRANGEMENT TO PREVENT OVERSPEED**

(30) Priority: 16.04.2025 GB 202505720
(71) Applicant: Rolls-Royce Deutschland Ltd & Co KG, 15827 Blankenfelde-Mahlow (DE)
(72) Inventor: TURCU, Artur, 15827 Blankenfelde-Mahlow (DE); SCHIESSL, Thomas, 15827 Blankenfelde-Mahlow (DE); CALDERON, Jorge, 15827 Blankenfelde-Mahlow (DE)

(57) **Abstract**

A gas turbine (G) comprising: a rotor arrangement (27) with a torque-generating component (A) and a torque-receiving component (B), which are drivingly coupled to each other via at least one primary torque transfer arrangement (PTA) defining a primary torque transfer path (P1). The torque-generating component (A) and the torque-receiving component (B) are further drivingly coupled by at least one secondary torque transfer arrangement (STA) defining a secondary torque transfer path (P2). The secondary torque transfer path (P2) is redundant from the primary torque transfer path (P1).

## Description

### FIELD

The present disclosure relates to a rotor arrangement for gas turbines in general, and more specifically, to gas turbines of engines and/or engines of aircrafts.

### BACKGROUND

In Civil Aviation, safety is, and will always be, the ultimate requirement that cannot be obliterated. As a safeguard of safety, the Aviation Authority must be satisfied that a new type or mark of engine is safe to be operated within declared limits, even in the event of certain component or control system failures. In subsonic as well as in supersonic flight conditions, the need of protection systems against a turbine overspeed and/or a shaft failure event, which may lead to hazardous consequences for aircrafts, are becoming increasingly important in civil transportation. Regulations dictate for gas turbines powering civil transportation aircrafts to have a protection system against turbine overspeed and/or a shaft failure event.

Shaft failures in particular result in a sudden decoupling of the compressor and turbine, with no instantaneous change in the aerodynamic power flow. The compressor will slow down and the turbine may overspeed very rapidly; if the engine is running at high power, the turbine disc may burst in a very short time unless surge occurs or fuel is shut off.

For High-pressure (HP), Intermediate-pressure (IP) or Low-pressure- (LP) rotors, an overspeed prevention is important, therefore an additional detection and a shut-off system may be applied in order to prevent disc burst. On interstage flanges, which are treated as part of the shaft system, additional reserve factors are applied to satisfy airworthiness requirements.

During loss of load of the High-pressure compressor (HPC)-, High-pressure turbine (HPT)- or Low-pressure turbine (LPT)- Fan connection failure the turbine rotor may be subject to an overspeed from the remaining energy in the gas as it expands through the turbine after the engine is shut down. Since rotors are classified as critical components due to hazardous failure effects if they would fail, they are designed and sized to withstand an overspeed event in order to be certified as required.

EP 3 647 567 B1 discloses an overspeed limiting system for gas turbine engine. Once the shaft failure is detected, the system restricts the gas path of the engine by activating the variable stator vanes (VSVs) that cuts off the air and the fuel supply to the engine.

There is a need to further improve gas turbine engines with respect to safety, whilst maintaining efficiency or at least to provide a useful alternative to known gas turbine engines. **SUMMARY**

According to a first aspect, a gas turbine is proposed, comprising a rotor arrangement with a torque-generating component and a torque-receiving component, which are drivingly coupled to each other via at least one primary torque transfer arrangement defining a primary torque transfer path. The torque-generating component can also be referred to as a torque-providing component, meaning that it introduces a torque and/or rotational movement into the rotor arrangement.

The torque-generating component and the torque-receiving component are further drivingly coupled by at least one secondary torque transfer arrangement defining a secondary torque transfer path, wherein the secondary torque transfer path is redundant from the primary torque transfer path.

The present disclosure is based on the idea to implement into a gas turbine, comprising a rotor arrangement with a torque-generating component and a torque-receiving component which are drivingly coupled to each other. The rotor arrangement comprises a primary torque transfer arrangement and a secondary torque transfer arrangement. The primary torque transfer arrangement defines a primary torque transfer path. The secondary torque transfer arrangement defines a secondary torque transfer path, configured to be redundant from the primary torque transfer path. Both torque transfer paths can thus form a "closed loop", for example within the HPC-HPT connection and/ or within the LPT-Fan connection of the gas turbine. The basic idea of a "closed loop" torque transfer path with a primary and secondary torque transfer arrangement may also be applied to a sub-system level, for example on a two stage HPT. In case of any failure of components within the primary torque transfer arrangement, such as a failure of a fan disc drive arm, a LP shaft or LPT interstage flange, may lead to a change of the torque transfer path to the secondary torque transfer path, which then can be considered "open loop", as the secondary torque transfer path may then replace the interrupted primary torque transfer path. Thus, a disc overspeed failure may effectively be prevented or delayed. The proposed rotor arrangement may not only maintain a single torque path between torque generating component and torque receiving component, but through the "closed loop" design may enable to also supply the remaining sections of the torque path subject to failure with torque. In other words, the torque path, although opened at a specific location upon failure, can reach "back" into a broken torque transfer arrangement via the torque receiving component. Each rotor component of the rotor arrangement, including torque generating and receiving components, as well as sub-components, may be coupled at two locations, or to two adjacent rotor components respectively, resulting in a serial transfer of torque from one adjacent rotor component to the other, forming a closed loop.

The torque generating component may be considered as the component or assembly, at which the primary and secondary torque path separate, and/or at which torque is introduced to the rotor arrangement. The torque receiving component may be considered as the component or assembly, at which the primary and secondary torque path rejoin, and/or at which torque is torque is provided by the rotor arrangement to an external component connected to the rotor arrangement, such as a fan stage or one or more compressor stages.

The proposed rotor arrangement may provide an additional safety mechanism and/ or may be an additional measure in case of a turbine overspeed and/or a shaft failure, in particular in addition or as a replacement or back up option to one or more existing conventional turbine overspeed or shaft failure protection systems of the engine. In particular, the engagement of the at least one secondary torque transfer path may be linked to the actuation of the existing detection system of the gas turbine engine.

Further the disclosure may decrease the dependency from a fuel rapid shut-off system for IP/ LP rotors reducing cost and weight and improve reliability, as well as from complex detection logics that may increase the risk of spurious activation and in-flight-shut-down events.

Further the proposed arrangement may reduce the terminal speed to which the discs may need to be designed to prevent the acceleration of the turbine rotor and therefore may lead to slimmer discs.

Another benefit of a thinner disc hub with smaller material volume is a faster disc body thermal response which reduces temperature gradient within the disc which is in general beneficial to stress levels and low cycle fatigue (LCF) life of features adjacent to hub (such as bore, diaphragm and drive arm fillets, flanges and bolt holes) and rim (cooling holes, bucket groove of slots). Further indirectly thinner and lighter turbine rotor discs may allow for higher cycle temperatures and speeds which in turn may improve efficiency and specific fuel consumption (SFC).

A further advantage particularly applies to supersonic flight conditions where environmental conditions are affecting the inside of the engine to a larger extent. In particular, the supersonic ram air pressure effects on the inside of the core passage of the engine, which results in an additional input of energy to the engine. Therefore, an additional failure mechanism would be an improvement of the standard safety mechanism.

Further the disclosure may remove any dependency to operating conditions under which critical conditions such as turbine overspeed and/or a shaft failure event may occur.

Further developments of the disclosure can be found in the dependent claims and show particularly advantageous possibilities to realize above-described concept regarding further advantages.

In a development of the disclosure, it is proposed that the primary and/ or the secondary torque transfer arrangement comprise at least one component interface, in particular a form-fit coaxially coupled interface. A component interface may be considered a coupling of two adjacent rotor components. The component interface may comprise bolts and/ or pins or splines or flanges and/or a curvic coupling. Alternatively, the component interface comprises a joined, in particular welded, or bonded coupling of two rotor components.

By a form-fit coupling of the primary and/or the secondary torque transfer arrangement, the primary and secondary torque transfer arrangements, or rotor components thereof, may be connected via form fit features such as flanges, splines, drive arms, curvic couplings and joints. Alternatively or additionally, the primary and/or the secondary torque transfer arrangement, or rotor components thereof, may be configured to be tightened to each other via fasteners such as bolts, pins, rivets and screws. The primary and/ or the secondary torque transfer arrangement may be coaxially coupled at least at two points to each other and may be configured to operate parallelly and/ or redundant to each other. This is beneficial as flange couplings tolerate high values of torque and vibration coming from high running conditions. Component interfaces, in particular form-fit coaxially coupled interfaces, may primarily be used to connect two different pieces of rotating components such as shafts to transmit the torque efficiently. These shafts may be joined together for transmission of power or torque from one to another interface coupling and may be designed with accurate alignment, high torque transmission, resistance to vibration etc. for better coupling.

In a development of the disclosure, the primary torque transfer arrangement and the secondary torque transfer arrangement may be separately coupled to the torque generating component and/or the torque receiving component, in particular by means of separate component interfaces. Via such design, a further degree of redundancy is achieved as a failure of a coupling, e.g. flange connection, to the one of the two torque transfer arrangements would still leave the other coupling intact. In particular, the torque generating component may be coupled to the primary torque transfer arrangement via a component interface, and to the secondary torque transfer arrangement via a separate, second component interface, and/or the torque receiving component may be coupled to the primary torque transfer arrangement via a third component interface, and to the secondary torque transfer arrangement via a separate, fourth component interface. There may be cases where torque generating and torque receiving component may be directly coupled to each other, e.g. in the primary torque transfer path via one form-fit coaxially coupled interface. There may be cases where a coupling is not established via a form-fit interface, but via joining or welding or bonding. Additionally, further component interfaces, such as form-fit coaxially coupled interfaces or other couplings, may exist in the rotor arrangement, e.g. for connecting adjacent rotor stages, that are not explicitly mentioned.

In a further development, it is proposed that the torque generating component comprises a plurality of torque generating sub-components, in particular turbine stages, and/or the torque receiving component comprises a plurality of torque receiving sub-components, in particular fan or compressor stages. The torque generating sub-components and/or the torque receiving sub-components may be coupled in series. By such serial connection, the first and second torque transfer path can be connected via the torque generating component and/or torque receiving component, and a "closed loop" of torque transfer can be ensured. The sub-components may be part of the "closed loop" torque transfer path and/or arrangement, in particular the primary torque transfer path and/or arrangement. The sub-components may be coupled to each other via component interfaces, e.g. via form-fit coaxially coupled interfaces, such as flange/ arm connections.

In a development of the disclosure, the primary torque transfer arrangement comprises a plurality of rotor components, in particular turbine and/or compressor stages and/or connecting arms. The rotor components may be coupled in series in a torque-transferring manner and/or arranged axially and/or radially adjacent to each other. Similarly, the secondary torque transfer arrangement may comprise a plurality of rotor components. In other developments, the secondary torque transfer arrangement may comprise, or be comprised of, a single rotor component, such as a hollow shaft or a tie shaft, or a tube. In particular, the secondary torque transfer arrangement may comprise, or be comprised of, a rotor component that is not designed for a constant torque transfer under running conditions. Such a rotor component(s) of the secondary torque transfer arrangement may be designed lighter e.g. than rotor components in the primary torque transfer arrangement or rotor components generally designed for a continuous torque transfer under running conditions, and/or may serve a different primary function, for example guiding air. In other words: in a further development of the disclosure, the secondary torque transfer arrangement may only be designed for temporary torque transfer during a failure.

In a further development, it is proposed that the at least one secondary torque transfer arrangement comprises a shaft, a tie shaft or a tube. The at least one secondary torque transfer arrangement may be configured to engage in case of a failure of the at least one primary torque transfer arrangement.

The secondary torque transfer path may be designed such that no torque is transmitted during normal operation and running conditions, and only in the event of the primary torque transfer path failure the secondary torque transfer path may engage. For example, a defined angular or axial relative offset within the primary torque transfer path until secondary torque transfer path engages may be used to ensure an engagement of the secondary torque transfer arrangement upon a failure of the first torque transfer arrangement. In other words: The secondary torque transfer path may be configured such that for example no torque is transmitted during normal operation and only in the event of a primary torque transfer path failure, the secondary torque transfer path transmitting features may engage and/or may transmit torque.

Further a defined angular or axial relative offset or movement between the primary and the secondary torque transfer path before the secondary torque transfer path engages may be used for failure detection where a designed-in imbalance may excite a vibration level serving as a means for failure detection. Other means of detection may be applied such as twist, sensors detecting axial shift and high vibrations. The shut down is still necessary, but less time critical as the reaction time may be delayed and extended from e. g. milliseconds to e. g. seconds.

The secondary torque transfer path may comprise, or consist of, already existing components within the gas turbine such as tie shafts, inner shafts, air guide tubes, reference tubes and fan catchers. The advantage to use components that exist anyway (and only may have to be slightly altered) may reduce additional weight and costs for new installations and maintenance. Further by using existing components, the radially available installation space may be maintained. For example, the secondary torque transfer arrangement may comprise, or consist of, an air guide tube of the gas turbine. A further advantage may lie in the current air system architecture of gas turbines, wherein air guide tubes may separate the inner and outer cavities. In particular, this means that there is a tube component available that may be additionally used for a secondary torque transfer path P2. By using existing structures for the purpose of torque transmission, such as tie shafts, inner shafts, air guide tubes or reference tubes the problem of limited radially available space may be overcome.

In a development of the disclosure, the primary torque transfer arrangement may be arranged and configured to radially, in particular concentrically, surround the secondary torque transfer arrangement.

In a further development, it is proposed that the secondary torque transfer arrangement is configured to be constantly in a torque transferring condition (i.e. in use) during running conditions, in particular in addition to the primary torque transfer arrangement.

In a further development of the disclosure, it is proposed that the secondary torque transfer arrangement is configured to be partly, or not, in a torque transferring condition during running conditions, wherein in particular the secondary torque transfer arrangement is configured to engage in case of a failure of primary torque transfer arrangement. The secondary torque transfer arrangement may be configured to act as a fail-safe arrangement. In case of a failure of the primary torque transfer arrangement, the secondary torque transfer arrangement may act as a fail- safe arrangement by engaging and providing backup. Further, it is generally beneficial to have backup options in case of any delay or failure of one of the existing turbine overspeed and/or a shaft failure protection systems. In particular, the engagement of the at least one secondary torque transfer arrangement may be linked to the actuation of the existing detection system of the gas turbine engine. In case of an emergency shut down of the engine, the "closed loop" may open and engage the redundant secondary torque transfer arrangement. Any failure within the primary torque transfer arrangement, or primary torque transfer path, respectively, such as rotor disc drive arms, LP shaft or LPT interstage flanges may lead to a change of the torque transfer path through the remaining, now "open loop". Thus, a disc overspeed failure is effectively prevented from happening. The secondary torque transfer arrangement is designed for emergency failure condition such as a shaft failure. Another advantage is that only the primary torque transfer arrangement has to fulfil the life cycle fatigue requirements as it carries the axial load under normal operating conditions, in particular in absence of a failure mechanism leading to rotor overspeed in the primary torque transfer arrangement. Alternatively, for continuous support both torque transfer paths may partly, but constantly be used under normal operating conditions. In other words, the total torque that is transferred between the torque-generating component and the torque-receiving component, may be distributed between the primary and secondary torque transfer path (and primary and secondary torque transfer arrangement, respectively).

In a development of the disclosure, it is proposed that the secondary torque transfer arrangement is configured to be activated via a failure of the primary torque transfer path. The secondary torque transfer arrangement may be configured to replace the primary torque transfer arrangement upon activation. In other words, the torque transfer from torque-generating component to torque-receiving component in such case will change paths upon failure of the primary torque transfer path, namely from the primary to the secondary torque transfer path.

In case of any failure of the primary torque transfer arrangement the at least one secondary torque transfer arrangement may engage and replace the primary torque arrangement. In particular, the engagement of the at least one secondary torque transfer arrangement may be linked to the actuation of the existing detection system of the gas turbine.

In case of any failure or emergency shut down of the engine, the "closed loop" may turn into an "open loop" and engage the redundant secondary torque transfer arrangement. Any failure within the primary torque transfer arrangement such as rotor disc drive arms, LP shaft or interstage flanges may lead to a change of torque transfer, from the primary torque transfer arrangement through the remaining secondary torque transfer arrangement, now "open loop". Thus, a disc overspeed failure is effectively prevented from happening. The secondary torque transfer arrangement is designed for emergency failure condition such as a shaft failure. In such embodiments, the at least one secondary torque transfer arrangement may be considered as a protection from hazardous conditions.

In a further development, the rotating arrangement may comprise a turbine and/ or compressor section.

The arrangement of the primary torque transfer arrangement within the HPC-HPT or LPT-Fan connection may comprise shafts, flanges, drive arms and/ or spline connections. The arrangement of the secondary torque transfer arrangement within the HPC-HPT or LPT-Fan connection may comprise a tie shaft, an inner shaft, an air guide tube, a reference tube and/ or a fan catcher. The advantage to use components that may exist anyway or may have to be slightly adjusted may reduce cost and weight.

Another benefit of thinner disc hub with smaller material volume may be a faster disc body thermal response which reduces temperature gradient within the disc which is generally beneficial to stress levels and low cycle fatigue (LCF) life of couplings adjacent to hubs (such as bore, diaphragm and drive arm fillets, flanges and bolt holes) and rim (such as cooling holes, bucket groove of slots).

Shorter axial disc stack length allowed by thin discs in turn may make the stator shorter and lighter. The relation of HPT disc hoop stress vs. rotor speed (NH) is exponential (NH^2) and disc stress has direct relationship with weight. Hence even a small reduction in NH may transfer to high weight benefit. For example, 5% terminal speed (TS) reduction may correspond to approx. 10% hoop stress reduction in disc hub which directly may translate to disc hub volume reduction.

In a development of the disclosure, it is proposed that the gas turbine is an aircraft engine.

In use, a gas turbine engine described and/or claimed herein may operate at different flight conditions defined elsewhere herein. Such flight conditions may be determined by the flight conditions (for example subsonic or supersonic conditions) of an aircraft to which at least one (for example 2 or 4) gas turbine engine may be mounted in order to provide propulsive thrust.

In a second aspect, an aircraft is proposed, comprising a gas turbine according to the first aspect of the disclosure.

The aircraft may be, among other types, a civil or military aircraft, or a space aircraft such as a space shuttle. In particular, the aircraft may be a subsonic or a supersonic aircraft, as a torque transfer arrangement according to the present disclosure is particularly suitable to alleviate the effects of a shaft failure and/or turbine overspeed event at high flight velocities.

### BRIEF DESCRIPTION OF THE DRAWINGS

The disclosure will be explained in more detail with exemplary embodiments described with reference to the figures, wherein:
**FIG. 1** shows a schematic of a gas turbine engine cross section of a first embodiment with a primary and secondary torque transfer arrangement between a Low-pressure turbine LPT and a fan wherein the secondary torque transfer arrangement comprises a reference tube;
**FIG. 2** shows a schematic of a gas turbine engine cross section of a second embodiment with a primary and secondary torque transfer arrangement between a High-pressure turbine HPT and a High-pressure compressor HPC as a second embodiment wherein the secondary torque transfer arrangement comprises a tie shaft;
**FIG. 3** shows a schematic of a gas turbine engine cross section of a third embodiment with a primary and secondary torque transfer arrangement between a High-pressure turbine HPT and a High-pressure compressor HPC wherein the secondary torque transfer arrangement comprises an air guide tube;
**FIG. 4** shows a schematic of a gas turbine engine cross section of a fourth embodiment with a primary and secondary torque transfer arrangement, wherein the secondary torque transfer arrangement comprises an air guide tube.

### DETAILED DESCRIPTION

Aspects and embodiments of the present disclosure will now be discussed with reference to the accompanying figures. Further aspects and embodiments will be apparent to those skilled in the art.

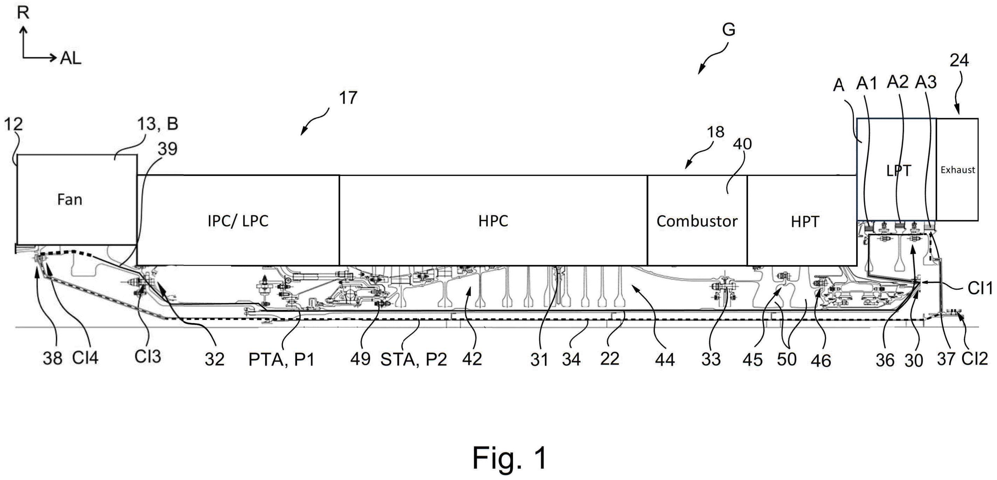

**FIG. 1** schematically illustrates a sectional half view of a gas turbine G of an aircraft engine E. Components of the aircraft engine E are arranged in series along a longitudinal engine axis AL. A radial axis R of the gas turbine engine extends perpendicularly to the longitudinal engine axis AL. Air is drawn in at the inlet 12 by means of a fan 13. This fan 13 is located in a fan frame enclosed by a nacelle (not shown here). The fan 13 is driven by a Low-pressure turbine LPT via a Low-pressure turbine LPT shaft 22. To generate thrust, the fan 13 supplies the intermediate-pressure compressor IPC and the High-pressure compressor HPC as well as the bypass airflow passage 17 with air. This creates a core airflow that runs through the annular inlet framed with a front inner casing to the core airflow passage of the core engine and a bypass airflow that runs through the bypass airflow passage 17. The air compressed in the compressor is mixed with fuel in the combustor 40 at the combustion section 18 and burned. The hot gas produced is used to drive the turbine, which can comprise a High-pressure turbine HPT and a Low-pressure turbine LPT. Optionally, the turbine may comprise a third shaft such as a intermediate pressure turbine IPT (not shown here). The energy released during combustion is used by the turbine to drive a Low-pressure turbine LPT shaft 22 and thus to drive the fan 13, in order to then generate the required thrust via the air conveyed into the bypass airflow passage 17. Both the bypass airflow from the bypass airflow passage 17 and the core airflow stream out at the rear inner casing via an annular exit cross section. The annular exit cross section usually has a thrust nozzle with a centrally arranged outlet cone (not shown here). To reduce noise, a mixer is located in the area of the outlet as part of an exhaust section 24. The special contour of the mixer deflects and mixes the main flow from the core airflow and the bypass airflow from the bypass airflow passage 17 of the gas turbine G in such a way that the resulting turbulence reduces the audible noise level.

FIG. 1 illustrates a primary torque transfer arrangement PTA and a secondary torque transfer arrangement STA as a "closed loop" torque transfer path concept for a connection between the low-pressure turbine LPT and the fan 13. In this example, the low-pressure turbine LPT can be considered the torque generating component A, comprising three torque generating sub-components A1, A2, A3 in the form of turbine stages, and the fan 13 can be considered the torque receiving component B. The primary torque transfer arrangement PTA defines a primary torque transfer path P1 and comprises a low-pressure turbine shaft 22, low-pressure turbine interstage flange/ arm connections 36, a low-pressure turbine LPT rear drum flange 30 and an integral curvic coupling flange 32. The secondary torque transfer arrangement STA defines a secondary torque transfer path P2 and comprises a reference tube 34, a low-pressure turbine interstage flange/ arm connections 36, and a fan flange 38. In other embodiments (not shown here) the secondary torque transfer path P2 may comprise alternative components such as an inner shaft (not shown here) or an air guide tube 35 or a tie shaft 48. Together both torque transfer paths P1 and P2 represent a "closed loop" wherein both torque transfer paths P1 and P2, and both torque transfer arrangements PTA, STA, respectively, are each coupled to the torque generating component A and the torque receiving component B via coaxially form-fit interfaces CI. For the torque generating component A, a first coaxially coupled form-fit interface CI1 is located at the LPT rear drum flange 30 (connecting the primary torque transfer path P1) and a second coaxially coupled form-fit interface CI2 at a connection between aftmost LP turbine stage (torque generating sub-component A3) and the reference tube 34 (connecting the secondary torque transfer path P2). For the torque receiving component B, a third coaxially coupled form-fit interface CI3 is located at the integral curvic coupling flange 32 (connecting the primary torque transfer path P1), and a fourth coaxially coupled form-fit interface CI4 at the fan flange 38 (connecting the secondary torque transfer path P2). Via the described coaxially form-fit interfaces CI, the primary torque transfer arrangement PTA and the secondary torque transfer arrangement STA are connected to the torque generating component A and the torque receiving component B to form a "closed loop" torque transfer path. In this arrangement the coaxially form-fit interface CI may comprise a flange with a bolts/ arm connection; or a flange with bolts connection. Any failure within the primary torque transfer path P1, for example a failure of a fan disc drive arm 39 or a failure of the LPT shaft 22 or a LPT to main shaft connection 30 or interstage flange/ arm connections 36 would lead to an engagement of the secondary torque transfer path P2, representing an "open loop". Thus, a disc overspeed failure is effectively prevented from happening or in case a shut down of the engine is still necessary, it may be less time critical as the reaction time may be extended from milliseconds to seconds due to the engagement of the secondary torque transfer path P2. The "closed loop" torque transfer paths may enable the HPT rotor 50 hub and body to be sized to 120% red line speed RLS already in the early development phases which may lead to reduced rotor weight and length at certification phase.

The proposed solution can also be applied to any other turbine in any type of gas turbine engine of the kind shown in FIG. 1 or of any other kind with a different design, for example such as an open-rotor or turboprop engine or a geared turbofan.

In the context of the present disclosure, at least one primary torque transfer arrangement PTA and at least one secondary torque transfer arrangement STA is already beneficial to protect the Low-pressure turbine LPT from overspeed failure. The primary and secondary torque transfer arrangements PTA, STA may be part of an existing protection system of the gas turbine G or may also be a replacement of it. The engine shut down may be commanded by the pilot based on a cockpit instrument indication with a command sequence in case of a shaft failure, further the "closed loop" is configured to turn into an "open loop" by the disengagement of the primary torque transfer arrangement PTA and the engagement of the secondary torque transfer arrangement STA which takes over the torque load until the gas turbine G shuts down. Preferably the secondary torque transfer arrangement STA may be configured to stay engaged for at least several minutes until the gas turbine may be shut down safely. In particular at supersonic conditions, the torque transfer arrangement may have a significant effect on the avoidance of a hazardous condition for the gas turbine G, subsequently for the aircraft engine E.

Further the existing turbine overspeed protection system of the gas turbine G may comprise a fuel supply shut-off mechanism to the engine, a variable stator vane mechanism and/or handling bleed valves. The compressor, in which the variable stator vane mechanism and the handling bleed valves are implemented, may be an Intermediate-pressure compressor IPC, or a High-pressure compressor HPC of the gas turbine engine E.

The torque transfer arrangement may provide an additional safety component, in case of a shaft failure, to the existing protection system of the engine. In operating conditions such as supersonic flight conditions this may have a significant benefit and effect on restraining the energy of the core airflow of the core engine. Also, the torque transfer arrangement may be implemented in several components of the gas turbine G.

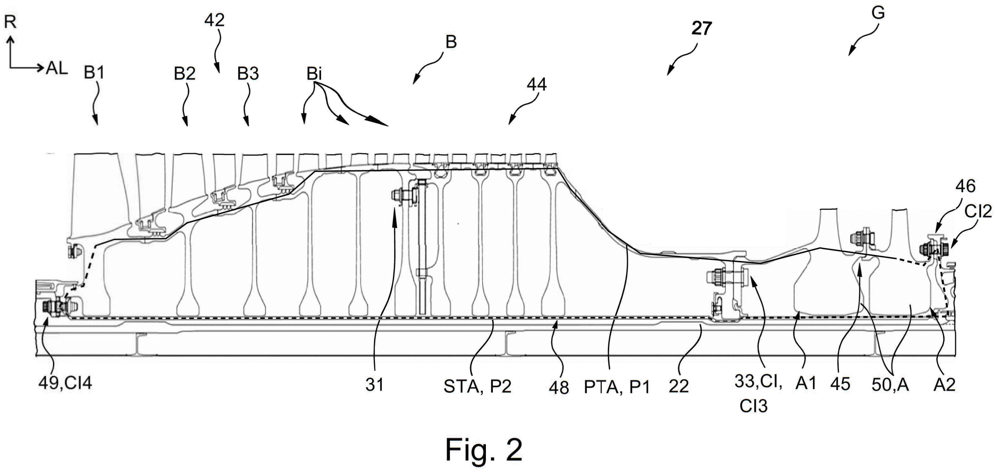

**FIG. 2** is an exemplary illustration of another embodiment of the disclosure. FIG. 2 illustrates a primary torque transfer arrangement PTA and a secondary torque transfer arrangement STA as a "closed loop" torque transfer path concept for a connection between a high-pressure compressor HPC (as a torque receiving component B) and a high-pressure turbine HPT (as a torque generating component A) . The primary torque transfer arrangement PTA defines a primary torque transfer path P1 and comprises a High-pressure turbine HPT rotor - High-pressure compressor HPC front and rear drum interstage flange/ arm connections 42, 44, and HPT further comprises a stubshaft flange 46. The secondary torque transfer arrangement STA defines a secondary torque transfer path P2 and comprises a tie shaft 48, a stubshaft flange 46 and further comprises a High-pressure compressor HPC front drum flange 49. Further there may be other options to implement other or additional components into the secondary torque transfer arrangement STA. This may have a limitation in the radially available installation space. It therefore may be beneficial to use existing structures for the purpose of torque transmission, such as tie shafts 48 and/or inner shafts (not shown here) and/or air guide tubes 35 and/or reference tubes 34. A first coaxially form-fit interfaces CI1 couples the torque generating component A, here in the form of the high-pressure turbine HPT with two HPT rotors 50 (shown as torque generating sub-components A1, A2), to the primary torque transfer arrangement PTA. In this case, the torque receiving component B is the high-pressure compressor HPC, with a plurality of coupled compressor stages as torque receiving sub-components B1, B2, B3, Bi (Bi indicating that there are more, and only some are exemplarily indicated) and is directly coupled to the torque generating component A via a HPC rear drum-HPT rotor flange 33. Hence, analogously to FIG. 1, the HPC rear drum-HPT rotor flange 33 may be considered the first form-fit coaxially coupled interface CI1 and at the same time the form-fit coaxially coupled interface CI3, as it couples the torque generating component A to the torque receiving component B, establishing the primary torque path P1, which is extended by the sub-components A1, A2, B1, B2, B3, Bi of the torque generating component A and the torque receiving component B. Further, the torque generating component A is connected to the secondary torque transfer arrangement STA at a second form-fit coaxially coupled interface CI2, here in the form of a stubshaft flange 46. The torque receiving component B is coupled to the secondary torque transfer arrangement STA at a fourth form-fit coaxially coupled interface C14, here in the form of the HPC front drum flange 49. The "closed loop" torque transfer paths may enable the HPT rotor 50 hub and body to be sized to 120% red line speed RLS already in the early development phases which may lead to reduced rotor weight and length at certification phase.

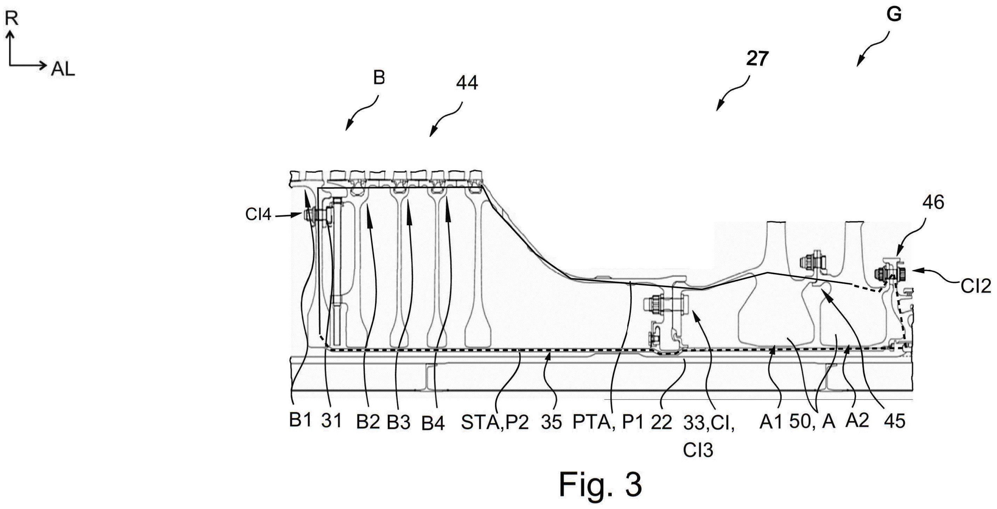

**FIG. 3** is an exemplary illustration of a third embodiment of the disclosure. FIG. 3 illustrates a primary torque transfer arrangement PTA and a secondary torque transfer arrangement STA as a "closed loop" torque transfer path concept for a High-pressure compressor - High-pressure turbine HPC-HPT connection. The primary torque transfer arrangement PTA defines a primary torque transfer path P1 and comprises an HPT rotor interstage flange/ arm connections 45, a HPC rear drum - HPT rotor flange 33 and a HPC rear drum interstage flange/ arm connections 44 up to a HPC stage 6 flange 31. The secondary torque transfer arrangement STA defines a secondary torque transfer path P2 and comprises an air guide tube 35, and further comprises a stubshaft flange 46 and a HPC stage 6 flange 31. In other embodiments (not shown here) the secondary torque transfer path P2 may comprise alternative embodiments such as an inner shaft or a reference tube. Even if the redundant secondary torque transfer path STA, P2 extends only over a smaller axial section, for example from a stubshaft flange 46 over an air guide tube 35 to a HPC stage 6 flange 31 with a coaxially form-fit interface I2, it may potentially be enough to significantly reduce the overspeed well below the 120% red line speed RLS which may lead to significant weight advantages and/ or reductions. The coaxially form-fit coupled interfaces CI1, CI2, CI3 are identical to the embodiment shown in FIG. 2; however, due to the shortened "closed loop" torque transfer path, the fourth coaxially coupled form-fit interface CI4 is located at the HPC stage 6 flange 31. Consequently, also compared to FIG. 2, the torque receiving component B comprises less sub-components, namely four torque receiving sub-components B1, B2, B3, B4 (as the HPC stages further upstream are not part of the closed loop torque path in this embodiment). In this embodiment, a torque-transferring connection between the air guide tube 35 of the secondary torque transfer arrangement STA and the HPC stage 6 flange 31 is created by coupling these two rotor components directly to each other, e.g. by joining, bonding or a coaxially coupled form-fit interface, establishing a further component interface CI. The "closed loop" torque transfer paths may enable the HPT rotor 50 hub and body to be sized to 120% red line speed RLS already in the early development phases which may lead to reduced rotor weight and length at certification phase.

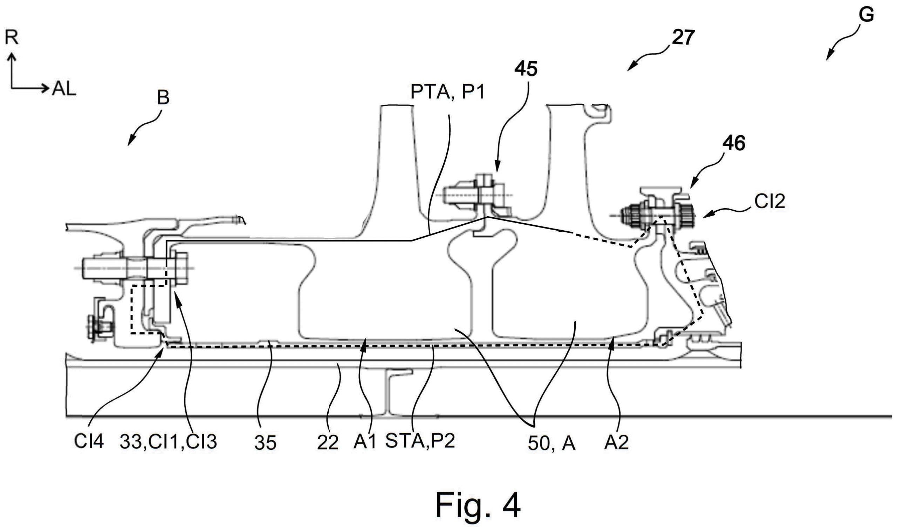

**FIG. 4** is an exemplary illustration of another embodiment of the disclosure. FIG. 4 illustrates a primary torque transfer arrangement PTA and a secondary torque transfer arrangement STA as a "closed loop" torque transfer path concept for an HPT rotor 50 connection. The primary torque transfer arrangement PTA comprises the HPT rotor 50 with HPT rotor interstage flange/ arm connections 45 and a HPC rear drum-HPT rotor flange 33. The secondary torque transfer arrangement STA defines a primary torque transfer path P1 and comprises an air guide tube 35, wherein the path further comprises a HPC rear drum-HPT rotor flange 33 and a stubshaft flange 46. In other embodiments (not shown here) the secondary torque transfer path P2 may comprise alternative embodiments such as an inner shaft or a reference tube. Both torque transfer paths are protected within the HPT rotor 50 connections. The "closed loop" torque transfer paths protect from an interstage drive arm failure. Shorter axial disc stack length may make the stator shorter and lighter. A first coaxially coupled form-fit interface CI1 (and at the same time third coaxially coupled form-fit interface CI3, as the torque generating component A and the torque receiving component B are directly coupled together), is located at the HPC rear drum-HPT rotor flange 33. A second coaxially coupled form-fit interface CI2 is located between the torque generating component A (the HPT rotor 50) and the secondary torque transfer arrangement STA (the air guide tube 35) at the stubshaft flange 46. A fourth component interface CI4 is located at the connection of the air guide tube 35 and the HPC rear drum, and may be a coaxially coupled form-fit interface, or in other embodiments a different, e.g. joined or bonded, component interface. In this arrangement each of CI1 and CI2/CI3 comprise a flange with bolts connection.

The above descriptions are intended for illustrative purposes only and are not intended to limit the scope of the present disclosure in any way. Various features of the various embodiments disclosed herein can be combined in different combinations to create new embodiments within the scope of the present disclosure.

### List of reference signs (part of the description):

- 12: Inlet
- 13: Fan
- 17: Bypass airflow passage
- 18: Combustion section
- 22: LPT shaft
- 24: Exhaust section
- 27: Rotor arrangement
- 30: LPT rear drum flange
- 31: HPC stage 6 flange
- 32: Integral curvic coupling flange
- 33: HPC rear drum-HPT rotor flange
- 34: Reference tube
- 35: Air guide tube
- 36: LPT interstage flange/ arm connections
- 37: LPT last stage disc
- 38: Fan flange
- 39: Fan disk drive arm
- 40: Combustor
- 42: HPC front drum interstage flange/ arm connections
- 44: HPC rear drum interstage flange/ arm connections
- 45: HPT rotor interstage flange/ arm connections
- 46: Stubshaft flange
- 48: Tie shaft
- 49: HPC front drum flange
- 50: HPT rotor
- A: Torque-generating component
- A1: First torque-generating sub-component
- A2: Second torque-generating sub-component

- A3: Third torque-generating sub-component
- AL: Longitudinal or rotational axis
- B: Torque-receiving component
- B1: First torque-receiving sub-component
- B2: Second torque-receiving sub-component
- B3: Third torque-receiving sub-component
- B4: Fourth torque-receiving sub-component
- Bi: I-th torque-receiving sub-component
- CS-E: Certification Specification Engines
- E: Aircraft engine
- G: Gas Turbine
- HPC: High-pressure compressor
- HPT: High-pressure turbine
- CI: Component interface
- CI1: First component interface
- CI2: Second component interface
- CI3: Third component interface
- CI4: Fourth component interface
- IPC: Intermediate-pressure compressor
- LCF: Low Cycle Fatigue
- LPC: Low-pressure compressor
- LPT: Low-pressure turbine
- ms: Millisecond
- NH: Rotor speed
- P1: Primary torque transfer path
- P2: Secondary torque transfer path
- PTA: Primary torque transfer arrangement
- R: Radial axis
- RLS: Red line speed
- SFC: Specific Fuel Consumption
- STA: Secondary torque transfer arrangement

## Claims

1. A gas turbine (G) comprising:
a rotor arrangement (27) with a torque generating component (A) and a torque receiving component (B), which are drivingly coupled to each other via at least one primary torque transfer arrangement (PTA) defining a primary torque transfer path (P1);
**characterized in that** the torque generating component (A) and the torque receiving component (B) are further drivingly coupled by at least one secondary torque transfer arrangement (STA) defining a secondary torque transfer path (P2), wherein the secondary torque transfer path (P2) is redundant from the primary torque transfer path (P1).

2. The gas turbine (G) of claim 1, wherein in the primary (PTA) and/ or the secondary torque transfer arrangement (STA) comprise at least one component interface (CI).

3. The gas turbine (G) of claim 2, wherein in the component interface (CI) is a form-fit coaxially coupled interface, in particular comprising bolts and/or pins and/or splines and/or flanges and/or a curvic coupling.

4. The gas turbine (G) of any preceding claim, wherein the primary torque transfer arrangement (PTA) and the secondary torque transfer arrangement (STA) are separately coupled to the torque generating component (A) and/or the torque receiving component (B), in particular by means of separate component interfaces (CI).

5. The gas turbine (G) of any preceding claim, wherein the torque generating component (A) comprises a plurality of torque generating sub-components (A1, A2, A3), in particular turbine stages, and/or the torque receiving component (B) comprises a plurality of torque receiving sub-components (B1, B2, B3, B4, Bi), in particular fan or compressor stages, wherein the torque generating sub-components (A1, A2, A3) and/or the torque receiving sub-components (B1, B2, B3, B4, Bi) are coupled in series.

6. The gas turbine (G) of any preceding claim, wherein the primary torque transfer arrangement (PTA) comprises a plurality of rotor components, in particular turbine and/or compressor stages and/or connecting arms, that are coupled in series in a torque-transferring manner and arranged axially and/or radially adjacent to each other.

7. The gas turbine (G) of any preceding claim, wherein the at least one secondary torque transfer arrangement (STA) comprises a shaft (51), a tie shaft (48) or a tube (34, 35).

8. The gas turbine (G) of any preceding claim, wherein the primary torque transfer arrangement (PTA) is radially, in particular concentrically, surrounding the secondary torque transfer arrangement (STA).

9. The gas turbine (G) of any preceding claim, wherein the secondary torque transfer arrangement (STA) is configured to be constantly in a torque transferring condition during running conditions.

10. The gas turbine (G) of any preceding claim, wherein the secondary torque transfer arrangement (STA) is configured to be partly or not in a torque transferring condition during running conditions, wherein the secondary torque transfer arrangement (STA) is configured to engage in case of a failure of primary torque transfer arrangement (PTA).

11. The gas turbine (G) of any preceding claim, wherein the secondary torque transfer arrangement (STA) is configured to be activated via a failure of the primary torque transfer path (P1), wherein the secondary torque transfer arrangement (STA) is configured to replace the primary torque transfer arrangement (PTA) upon activation.

12. The gas turbine (G) of any preceding claim, wherein the rotor arrangement (27) comprises a turbine section and/ or a compressor section.

13. The gas turbine (G) of any preceding claim, wherein the gas turbine (G) is an aircraft engine (E).

14. An aircraft including the gas turbine (G) of any preceding claim.
